# EUROPEAN PATENT APPLICATION

(11) **EP 2 065 856 A1**
(43) Date of publication of application: **03.06.2009**
(21) Application number: 08270006.3
(22) Date of filing: 25.11.2008
(51) Int. Cl.: G07F 7/10, G07C 9/00

(54) **Transaction security method and apparatus**

(30) Priority: 29.11.2007 US 947106
(71) Applicant: Milne, Neil, Kemnay, Aberdeenshire AB51 5LH (GB)
(72) Inventor: Milne, Neil, Kemnay, Aberdeenshire AB51 5LH (GB)
(74) Representative: McBride, Peter Hill

(57) **Abstract**

A method and apparatus for increasing the security of transactions between two parties is disclosed. The method and apparatus employ multiple PINs from which elements are selected for user identification. The transactions may be financial transactions or any other transaction where user identification is required.

## Description

### FIELD OF THE INVENTION

This invention relates to a transaction security method and apparatus. More particularly, but not exclusively, the invention relates to a transaction security method and apparatus for selecting elements of a personal identification number (PIN) using variable PIN generation.

### BACKGROUND OF THE INVENTION

The introduction of chip and PIN technology has increased the number of PINs that card holders of credit and debit cards must memorize, a recent survey revealing that approximately two million people have to memorize at least five different PINs. The difficulty in memorising so many PINs results in many card holders forgetting at least one of their PINs at some time. This leads to card holders either changing all, or many, of their PINs to be the same, or writing their PINs down, typically in the wallet where their credit and debit cards are kept. Such use of a single PIN for multiple cards or writing down of PINs is a security risk.

The use of a single PIN allows a criminal who obtains a card holder's cards, or card details, to obtain goods, services or money from all of the obtained cards once the PIN has been determined.

Additionally, in those countries where chip and PIN has not been introduced there still exists the possibility of forgery of a cardholder's signature.

The security implications of writing down PINs, particularly in a wallet, are self-evident.

Current chip and PIN technologies store card holder's details on the card's chip. These details include, inter alia, the card holder's bank details, expiry date of the card and a fixed PIN. Typically, the fixed PIN is an invariant four digit number that can only be changed when the card is used in an automatic teller machine (ATM) or other such hardware.

A security issue arises even with such chip and PIN systems in that once the card holder's invariant PIN is known the card can be used until the card is cancelled.

Of particular concern is the use of a chip in chip and PIN cards. This is because the holding of the PIN data upon the chip makes the system vulnerable to being hacked should a customer lose their card as the thief may be able to extract all pertinent data from the card using a suitably programmed card reader.

It will be appreciated that the term "PIN" as used herein encapsulates both pure numeric, combined alphanumeric and pure alphabetical identifiers, for example an alphabetical password.

### SUMMARY

According to a first aspect of the invention a method of performing a financial transaction may include:
i) storing, on a chip of a payment card, identification data;
ii) selecting part of the identification data for use in a verifying the identity of a user performing a transaction;
iii) requesting the entry of code data at a data entry device of an authorization device;
iv) determining if the code data matches the part of the identification data at the authentication device; and
v) allowing or disallowing continuation of the transaction based upon the determination of step (iv).

The use of only part of identification data for the verification of a user's identity and the use of a coded form of the identification data increases transaction security as the sequence of the identification data and its coding key must be known.

The method may include requesting the selection of the part of the identification data, following insertion of a payment card into the authorization device. The authorization device may comprise an ATM or point of sales (POS) terminal. The method may also include carrying out the determination of step (iv) at the authorization device.

The method may further include selecting a character string comprised of one, two or more characters as the part of the identification data. The identification data may comprise any one of the following: alphabetical string, an alphanumeric string as well as coding the identification data as a series of numerical values. The method may include assigning each letter of the alphabet a numerical value, for example corresponding to its position in the alphabet. The numerical value may be a two digit decimal number. Such a coding key is relatively easy for a user to remember. It will be appreciated that other coding keys can be used.

Optionally, the given part of a given identification data that is selected may be changed for successive uses of that identification data.

Optionally, a different unique part of a given identification data is selected for successive uses of that identification data, until every unique combination is used once only.

Optionally, the sequence of the different parts of the identification data is selected in a random order.

Optionally, once every unique combination of an identification has been used, the selection process starts over.

Optionally, the method comprises storing a plurality of identification data associated with a user upon the chip of a payment card.

Optionally, one or more of the plurality of identification data is associated with an upper limit transaction value.

Optionally, one or more of the plurality of identification data is associated with a given time period.

Optionally, one or more of the plurality of identification data is associated with a given geographical location.

Optionally, as part of the transaction, the geographical location of the authorization device is checked against the identification data from which the part for verification is selected, and a transaction is allowed to proceed only if the identification data is associated with the same geographical location as the authorization device. Said geographical location is optionally at least one of a town, a region, a state, a country or a continent.

Optionally, a user selects which of the identification data to select a part of for a given transaction.

Optionally, at least one of the plurality of identification data is associated with an upper limit defining a maximum number of transactions that can be carried out using that identification data.

Optionally, the maximum number of transactions is a maximum number of consecutive transactions.

Optionally, once the maximum number of transactions is reached, the user is forced to select a different identification data.

Optionally, each of the plurality of identification data is associated with an identifier representing a logical position.

Optionally, the identification data positions are represented by ordinal numbers.

Optionally, the positions of the identification data rotate.

Optionally, the rotation is on a temporal basis.

Optionally, the rotation is on a geographical basis.

Optionally, an identifier associated with a first position is associated with a first upper limit transaction value and an identifier associated with a second position is associated with a second upper limit transaction value.

Optionally, the step of selecting part of the identification data for use in verifying the identity of a user performing a transaction comprises selecting parts from a plurality of identification data. This is optionally performed after an erroneous entry by a user of identification data according the preceding methods.

Optionally, the identification data is an alphabetic or alphanumeric password.

Optionally, the code data is a numeric string.

Optionally, the method comprises coding the identification data as the code data using a coding key that assigns each letter of the identification data a numeric value corresponding to its position in the alphabet.

Optionally, any numeric characters in the identification data remain unchanged in the code data.

Optionally, the coding key is displayed at or in sight of an ATM or POS terminal.

According to a second aspect of the invention a method of performing a financial transaction may comprise:
i) storing, on a chip of a payment card, a plurality of identification data;
ii) selecting at least one of the identification data for use in verifying the identity of a user performing a transaction;
iii) requesting the entry of code data at a data entry device of an authorization device;
iv) determining if the code data matches the selected identification data; and
v) allowing or disallowing continuation of the transaction based upon the determination of step (iv).

Optionally, one or more of the plurality of identification data is associated with an upper limit transaction value.

Optionally, one or more of the plurality of identification data is associated with a given time period.

Optionally, one or more of the plurality of identification data is associated with a given geographical location.

Optionally, as part of the transaction, the geographical location of the authorization device is checked against the selected identification data, and a transaction is allowed to proceed only if the selected identification data is associated with the same geographical location as the authorization device.

Optionally, said geographical location is at least one of a town, a region, a state, a country or a continent.

Optionally, a user selects which of the identification data to use for a given transaction.

Optionally, at least one of the plurality of identification data is associated with an upper limit defining a maximum number of transactions that can be carried out using that identification data.

Optionally, the maximum number of transactions is a maximum number of consecutive transactions.

Optionally, once the maximum number of transactions is reached, the user is forced to select a different identification data.

Optionally, each of the plurality of identification data is associated with an identifier representing a logical position.

Optionally, the identification data positions are represented by ordinal numbers.

Optionally, the positions of the identification data rotate.

Optionally, the rotation is on a temporal basis.

Optionally, the rotation is on a geographical basis.

Optionally, an identifier associated with a first position is associated with a first upper limit transaction value and an identifier associated with a second position is associated with a second upper limit transaction value.

Optionally, the step of selecting an identification data for use in verifying the identity of a user performing a transaction comprises selecting a plurality of identification data. This method is optionally performed after an erroneous entry by a user of identification data according the methods described above.

Optionally, the identification data is an alphabetic or alphanumeric password.

Optionally, the code data is a numeric string.

Optionally, the method comprises coding the identification data as the code data using a coding key that assigns each letter of the identification data a numeric value corresponding to its position in the alphabet.

Optionally, any numeric characters in the identification data remain unchanged in the code data.

Optionally, the coding key is displayed at or in sight of an ATM or POS terminal.

According to a third aspect of the present invention there is provided a transaction security apparatus including a transaction authorization device having a processor, a card reader and a data entry device, the transaction authorization device being arranged to request the selection of part of the identification data for use in verifying the identity of a user performing a transaction, following receipt of a payment card in the card reader, from a chip on the payment card, and to request entry of code data via the data entry device, the processor being arranged to compare the code data and the part of the identification data selected for use in verification of the user's identity and to generate allowance data based upon the comparison; the terminal being arranged either allow or prohibit the transaction based upon the contents of the allowance data and the terminal being arranged to output the allowance data to a server of a financial institution.

The authorization device may include an ATM or point of sales (POS) terminal. The processor may be arranged to request a character string comprised of one, two, or more characters as the part of the identification data. The identification data may include any one of the following: alphabetical string, an alphanumeric string. The transaction authorization device may optionally include a password select key.

The processor may be arranged to code the identification data as a series of numerical values. The processor may be arranged to assign each letter of the alphabet a numerical value, for example corresponding to its position in the alphabet. The numerical value may be a two digit decimal number.

The data entry device may comprise any one of the following: alphanumeric keypad, alphabetic keypad. The keypad may be encrypted. The processor may comprise an encryption key corresponding to that of the keypad.

Optionally, the apparatus of the third aspect can be arranged to perform the methods of the first aspect.

According to a fourth aspect of the present invention there is provided a transaction security apparatus comprising a transaction authorization device comprising a processor, a card reader and a data entry device, the transaction authorization device being arranged to:
request the selection of an identification data for use in verifying the identity of a user performing a transaction following receipt of a payment card in the card reader, from a plurality of identification data stored on a chip of the payment card; and to
request entry of code data via the data entry device; and wherein
the processor is arranged to compare the code data and the identification data selected for use in verification of the user's identity and to generate allowance data based upon the comparison; and wherein
the terminal is arranged either allow or prohibit the transaction based upon the contents of the allowance data and to output the allowance data to a server of a financial institution.

Optionally, the authorization device comprises an ATM or point of sales (POS) terminal.

Optionally, the processor is arranged to request a character string comprised of one, two or more characters as the part of the identification data, and the character string may be alphanumeric or alphabetical.

Optionally, the transaction authorization device comprises a password select key.

Optionally, the data entry device comprises an alert key.

Optionally, the data entry device comprises a keypad, which can be a numeric, an alphabetic, or alphanumeric keypad.

Optionally, the apparatus of the fourth aspect can be arranged to perform the methods of the second aspect.

According to a fifth aspect of the present invention there is provided a payment card including a chip, the chip storing identification data thereupon, the chip being arranged to select a part of the identification data to be used as verification of a user's identity upon receipt of a request for identification data from an authorization device.

The chip may store a plurality of identification data associated with a user upon the data storage device. The chip may be arranged to select which of the identification data is available for selection of a part of it.

The chip may be arranged to select which of the identification data to select a part of based upon any of the following: temporal criteria, geographical criteria. The temporal criteria may comprise any one of the following: a monthly basis, quarterly basis, any other suitable temporal period. The geographical basis may comprise any one of the following:
different town, different region, different state, different country, any other suitable geographical criteria. The chip may be arranged to switch between a first and a second of the identification data in response to a user request once the transaction has been allowed.

According to a sixth aspect of the present invention there is provided a payment card comprising a chip, the chip storing a plurality of identification data thereupon, the chip being arranged to select one of the identification data to be used as verification of a user's identity upon receipt of a request for identification data from an authorization device.

The present disclosure may also provide software which, when executed upon a transaction authorization device, causes the authorization device to request the selection of part of identification data stored upon a chip of a payment card inserted into a card reader of the authorization device, request entry of code data via a data entry device of the authorization device, compare the code data to the part of the identification data and determine whether a transaction is allowed or not.

According to a seventh aspect of the invention there is provided a method of transaction security comprising the steps of:
i) storing, at a server, identification data;
ii) selecting part of the identification data for use in verifying the identity of a user performing a transaction;
iii) transferring a request for the identification data to a data entry device across a network;
iv) requesting the entry of code data at the data entry device of an authorization device;
v) transferring the code data across the network to the server
vi) determining if the code data matches the part of the identification data at the server; and
vii) allowing or disallowing continuation of the transaction based upon the determination of step (vi).

Optionally the method comprises storing a plurality of identification data associated with a user at the server.

Optionally the method comprises allowing user selection of which of the plurality of identification data to select part of in step (ii).

Optionally the method comprises switching between a first and a second of the identification data in response to a user request, following a successful determination at step (vi).

The method of the seventh aspect can be performed in combination with any of the methods of the first aspect.

According to an eighth aspect of the invention there is provided a method of transaction security comprising the steps of:
i) storing, at a server, a plurality of identification data;
ii) selecting at least one of the identification data for use in verifying the identity of a user performing a transaction;
iii) transferring a request for the identification data to a data entry device across a network;
iv) requesting the entry of code data at the data entry device of an authorization device;
v) transferring the code data across the network to the server
vi) determining if the code data matches the selected identification data at the server; and
vii) allowing or disallowing continuation of the transaction based upon the determination of step (vi).

The method of the eighth aspect can be performed in combination with any of the methods of the second aspect.

According to a ninth aspect of the invention there is provided a transaction security apparatus comprising a server storing identification data associated with a user and a transaction authorization device comprising a processor, a card reader and a data entry device, the server being arranged to:
select part of identification data for use in verifying a transaction and
to pass a request for the part of the identification data across a network to the authorization device:
   the authorization device being arranged to request the entry of code data via the data entry device, and
   to pass the code data to the server via the network; and wherein
   the server is arranged to compare the code data and the part of the identification data selected for use in verification of the user's identity and to allow or disallow the transaction based upon the comparison of the code data to the part of the identification data.

Optionally, the server is arranged to request a character string comprised of one, two or more characters as the part of the identification data, and the character string may be alphanumeric or alphabetical.

Optionally, the server is arranged to code the identification data as a series of numerical values.

Optionally, the server stores a plurality of identification data associated with a user upon a data storage device.

Optionally, the server is arranged to select which of the identification data is available for selection of a part of it.

Optionally, the server is arranged to select which of the identification data to select a part of based upon any of the following: temporal criteria, geographical criteria.

Optionally the apparatus comprises a user operable mechanism arranged to allow selection of a piece of identification data for use from a plurality of identification data stored at the server.

The apparatus of the ninth aspect can be arranged to perform any of the methods of the seventh aspect.

According to a tenth aspect of the invention there is provided a transaction security apparatus comprising a server storing a plurality of identification data associated with a user and a transaction authorization device comprising a processor, a card reader and a data entry device, the server being arranged to:
select at least one of the identification data for use in verifying a transaction and
to pass a request for the selected identification data across a network to the authorization device:
   the authorization device being arranged to request the entry of code data via the data entry device, and
   to pass the code data to the server via the network; and wherein
   the server is arranged to compare the code data and the given identification data selected for use in verification of the user's identity and to allow or disallow the transaction based upon the comparison of the code data to the selected identification data.

Optionally, the server is arranged to request a character string comprised of one, two or more characters as the part of the identification data, and the character string may be alphanumeric or alphabetical.

Optionally, the server is arranged to code the identification data as a series of numerical values.

Optionally, the server is arranged to select which of the identification data is available for selection.

Optionally, the server is arranged to select the identification data based upon any of the following: temporal criteria, geographical criteria.

Optionally the apparatus comprises a user operable mechanism arranged to allow selection of a piece of identification data for use from the plurality of identification data stored at the server.

The apparatus of the tenth aspect can be arranged to perform any of the methods of the eighth aspect.

According to further aspects of the invention, a computer program product is provided, which is executable on an authorization device or on a server for the implementation of any of the first to tenth aspects.

### BRIEF DESCRIPTION OF THE DRAWINGS

Embodiments of the invention will now be described, by way of example only, with reference to the accompanying drawings, in which:

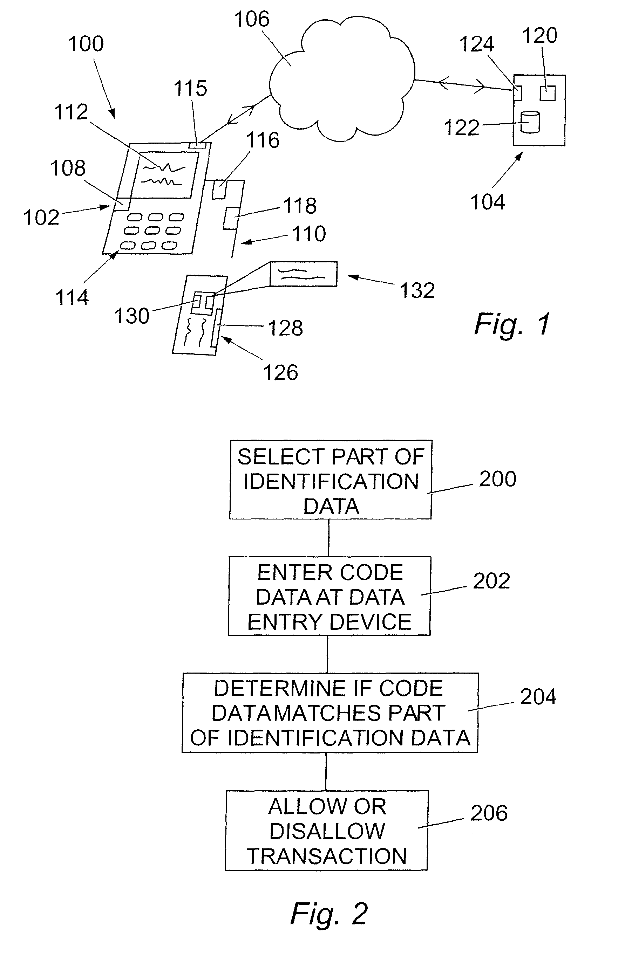

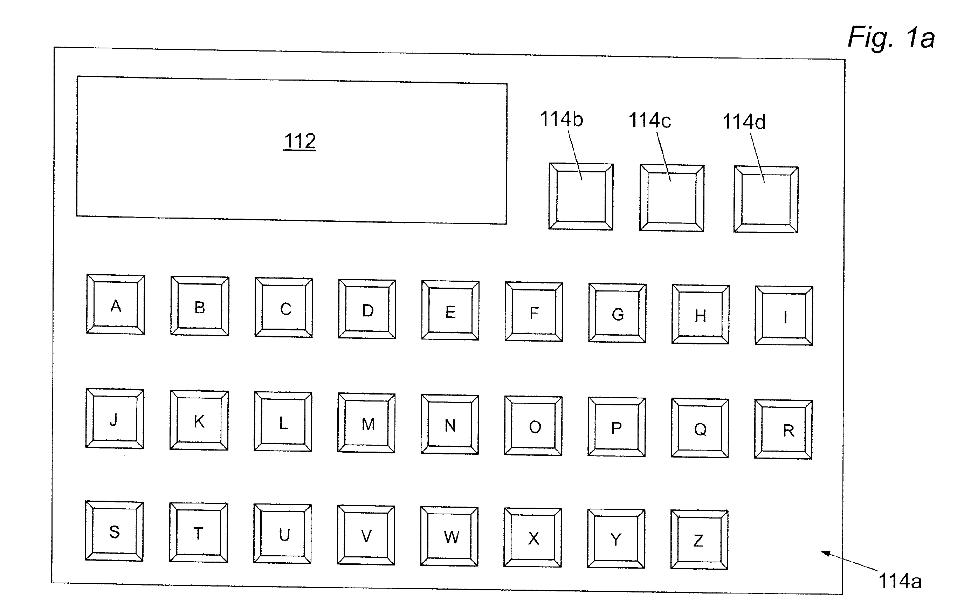

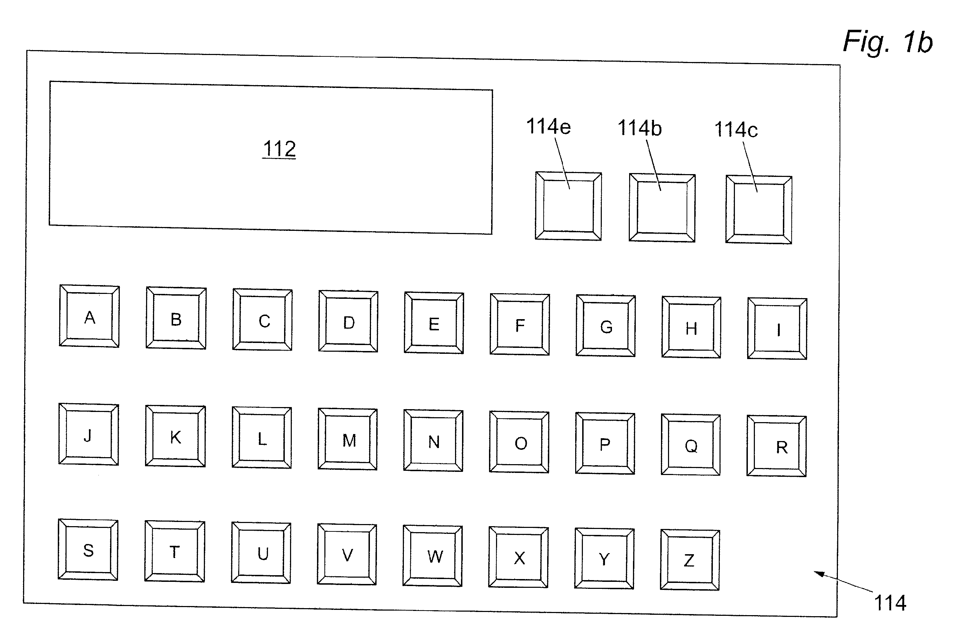

Figure 1 is a schematic diagram of an embodiment of a transaction security apparatus;
Figure 1 a is representation of an embodiment of a keyboard of the apparatus of Figure 1;
Figure 1 b is representation of an alternative embodiment of a keyboard of the apparatus of Figure 1;
Figure 2 is a flow diagram showing the steps of a transaction security method;
Figure 3 is a schematic diagram of an embodiment of a transaction security apparatus; and
Figure 4 is a flow diagram showing the steps of a transaction security method.

### DETAILED DESCRIPTION

Referring now to Figures 1 to 1 b, a transaction security apparatus 100 includes a transaction authorization device 102, a server 104 and a network 106. Typically, the transaction authorization device 102 includes an ATM or an electronic point of sale (EPOS) sales terminal, for example as those manufactured by NCR Corporation of Ohio. The server 104 is typically a secure server operated by a bank, or other large financial institution. Typically, the network 106 is a secure private network, or a virtual private network (VPN) established over a public network, for example the Internet.

The authentication device 102 includes a processor 108, card reader 110, a screen 112, a data entry device 114 and a network connection 115. The card reader 110 includes a chip and PIN reader 116 and a magnetic strip reader 118. Typically, the data entry device 114 is an encrypted keyboard as is known to those skilled in the art of ATMs. It will be appreciated that other data entry devices such as microphones can be used.

Referring in particular to Figure 1a, an example of a data entry device 114 includes a keypad 114a, an enter key 114b, a cancel key 114c and an alert key 114d. Referring in particular to Figure 1 b, another example data entry device 114 includes a keypad 114a, an enter key 114b, a cancel key 114c and a change password key 114e. It will be appreciated that in either of the two embodiments of the data entry device 114 shown in Figures 1a, and 1b the keypad 114a may be numeric, alphanumeric or alphabetical. It will be appreciated that the data entry device 114 may include either, or both of the alert key 114d and the change password key 114e. The server 104 may include a processor 120, a data storage device 122 and a network connection 124.

A payment card 126 may include a magnetic strip 128 and a chip 130. The chip 130 has stored upon it, inter alia, PIN 132 which serves as identification data. Typically, the PIN 132 comprises an alphabetical string or an alphanumeric string. For example the PIN 132 may be a word that is important to a user for example "HOME" or it may be random selection of characters for example "F3JZ89".

In use, a user may insert the payment card 126 into the card reader 110. The processor 108 interrogates the chip 130 for part of the PIN 132. For example, the processor 108 may request the first and third characters of the PIN 132, which would be "HM" or "FJ" in the examples given above. A screen 112 can display one or more numbers representing the position of the characters from within the relevant PIN which should be entered.

An example implementation of this embodiment will now be discussed. Each card holder could choose, memorise and agree with their bank and the credit card company a password containing numerous letters, for example an eight letter word comprising two four letter names. In preferred embodiments, eight different characters are used for the password. For example, if one was a soccer fan one might easily remember the name "David Beckham". To select an eight letter password this name could be broken down to DAVE BECK, and then to further increase the effectiveness of security it could be changed to DAVE BUCK. This password would be set out as follows:

| | | | | | | | | |
|---|---|---|---|---|---|---|---|---|
| Requested Numbers: | 1 | 2 | 3 | 4 | 5 | 6 | 7 | 8 |
| Password Letters: | D | A | V | E | B | U | C | K |

The credit card company computer would be programmed with either the letters of the password or the digital numbers they represent or both, e.g. D = 04, A = 01, V=22 and so on.

The Computer will be programmed to request two random letters on each credit or bank card transaction. There are 56 two-letter PIN number permutations in a eight letter password. The computer could now hold 56 PIN numbers for this card holder in either letter form e.g. D & B or in a four digit number form, for example D = 04, B = 02, so the PIN number would be 0402.

The computer could be programmed to select pairs of letters randomly but also ensuring the 56 variations are utilised and not repeated. If a cardholder used two of the same letters in their password, the computer could be programmed to reduce the 56 variations of letters to ensure that this letter is used in the same frequency as the others.

When the card holder uses their credit, bank or store card, instead of being requested for a fixed PIN number on the keypad, as in the current chip and PIN system, they will be asked for two letters, which will be indicated on the appropriate screen using the request numbers of the two random letters of the password. On using their cards for the second purchase or cash withdrawal they can be requested to provide a different set of two letters and so on.

For example:

| | | | | | | | | |
|---|---|---|---|---|---|---|---|---|
| Request Numbers: | 1 | 2 | 3 | 4 | 5 | 6 | 7 | 8 |
| Password Letters: | D | A | V | E | B | U | C | K |

In a first transaction, a first random PIN from the computer would be indicated on the keypad screen , for example the request numbers 5 & 2. The cardholder would key in numbers 02 and 01 for these are the digit numbers for B & A (PIN number 0201).

In a second transaction, a second random PIN request could be 3 & 7. The cardholder would key in 22 and 03, for they are the digit numbers for V & C (PIN number 2203).

In a third transaction, a third random PIN request could be 8 & 4. The card holder would key in 11 and 5, for they are the digit numbers for K & E (pin number 1105).

From the above three transactions it can be seen that three completely different PIN numbers have been used and recognised by the credit card company computer. This variable PIN number is significantly more secure than a fixed 4-digit PIN number. Fraud based on PIN discovery, such as hidden ATM camera, tampered ATM machines, or corrupt bank teller staff would effectively be eradicated, because this type of fraud relies upon there being a fixed PIN number.

To aid the use of such a variable PIN, a list of letters from the alphabet with their relevant 2-digit numbers alongside each letter can be displayed at each keypad or ATM. In alternative embodiments, the numerical type of keypads currently used in retail outlets and also at ATMs could be replaced by letters of the alphabet type keypads for example of the type shown in Figs. 1 a and 1 b and as discussed below. Now the cardholder can enter the letters of the password directly.

For Example:

| | | | | | | | | |
|---|---|---|---|---|---|---|---|---|
| Request Numbers: | 1 | 2 | 3 | 4 | 5 | 6 | 7 | 8 |
| Password Letters: | D | A | V | E | B | U | C | K |

In a first transaction, a first random PIN request of 5 and 2 would require a user to key in B & A; in a second transaction a second random PIN request of 3 and 7 would require a user to key in V & C; and a third random PIN request of 8 and 4 would require a user to key in K & E.

Thus it can be seen that using variable letters instead of numbers significantly improves security against using a single fixed 4-digit PIN number. It also demonstrates that it is much simpler for the card holder to use rather than converting the letters into numbers on a numerical keypad.

If someone fraudulently obtains one pair of a cardholder's PIN numbers/letters and either steals the card or obtains the fixed information on the card, when they try to use the card to obtain goods or cash illegally, it is highly unlikely they will know or even guess correctly the next set of random pin numbers/letters. In other words the chances of guessing correctly the next two letters is almost impossible, and if they try again and again, this can be prevented by programming the computer to cancel the card if a certain number of incorrect attempts are made, ideally two or three. It is more likely that once a fraudster or thief finds out if the card has a variable number system, they would know it would be futile to try and use it.

A further safety mechanism that can be built in the event of one or more incorrect PIN entries is to program a computer in that scenario to automatically request two letters from one password and a further one or more letters from another password, which will make it even more difficult for the criminals.

The computer could also be programmed to alert the cardholder via the keypad screens, so that if a number of incorrect PIN selections have been attempted, the card holder could print out a statement which would reveal the number of incorrect attempts, values and location. If these were not carried out by the cardholder they would contact the credit card helpline to discuss. Although a printer is not illustrated in the Figures, it will be understood to those skilled in the art that a printer can readily be incorporated with an ATM or a point of sale device in a well known manner for the incorporation of these features.

In one embodiment, the user can use the change password key 114e to select which of their plurality of PINs 132 they would prefer to use, or allow the server 104 to make the choice on their behalf. If a user has, for example, five passwords the change password key 114e can be used to cycle through them by multiple depressions of the key 114e.

It is to be appreciated that the use of multiple passwords can be independent of the use of a variable PIN, that is, the extra security of the new system can come about because of the selection of one of several available passwords. However it is also possible for the use of multiple passwords to be combined with the variable PIN selection for extra security.

The processor 108 outputs a request for the characters forming part of the PIN 132 to the screen 112. The user enters code data via the data entry device 114. The code data is compared to the requested part of the PIN 132 and a transaction is either forbidden or permitted dependent upon whether the code data and the requested part of the PIN match. The screen 112 can display one or more numbers representing the position of the characters from within the relevant PIN which should be entered, as well as the identity of the PIN 132 from the plurality of PIN's which should be entered. The identity of the PIN 132 can optionally be represented by an ordinal numeral, for example "1^{st}", "2^{nd}" and so on.

The system may also be programmed to ensure that every possible variation on pairs of letters will be utilised before the first pair of letters are requested again. For example in an eight letter password there are fifty-six variations of two letter PIN requests, each of which can be cycled through, optionally in a random sequence. It will be appreciated that the number of variations will be different if the password has a different number of characters and/or if the PIN is chosen to be a different number of characters than two. The case of a two character PIN is an example only and the PIN could be comprised of any number of characters, with a greater number of characters leading to greater number of possible combinations and thus a greater level of security.

If the transaction is allowed, allowance data is generated at the processor 108 and this is passed across the network 106 to the server 104 of the user's bank or other financial institution, where a debit is made from their account.

In another embodiment, the part of the PIN 132 used in verifying the user's identity is coded, for example by converting each letter into a two digit number. Typically, the two digit number may be the position of the letter in the alphabet. In this embodiment numerical values forming part of the PIN 132 are, typically, left unchanged. For example, in the examples above the letters "DV" correspond to the numerical value "0422", and "AK" correspond to the numerical value "0111 ". The use of such numerical coding allows the retrofitting of this embodiment to existing ATMs and EPOS terminals having only numeric keypads.

In a further embodiment, the data entry device 114 may comprise an alphanumeric keypad or keyboard. This allows direct entry of alphanumeric elements of the part of the identification data.

In a still further embodiment, the chip 130 stores a plurality of PINs 132. The chip 130 selects which of the PIN 132 to select a part of in response to a request from the authentication device 102.

Alternatively, each of the plurality of PINs 132 may correspond to a set maximum transaction limit. For example, a first PIN 132 could be used for individual transactions below a given threshold, for example £100 and a second PIN 132 could be used for individual transactions at or above the threshold. Additionally, or alternatively, a cumulative transaction limit may be placed upon the use of each PIN 132. The cumulative limit could be based on a total amount withdrawn in a given time period, or on a given number of transactions being carried out. For example, a cumulative limit of £1,000 in any calendar month, or other pre-determined time period, may be placed upon one of the PINs 132. The effect of this cumulative limit being breached would be to request characters from a second password. The screen 112 can be used to display to the user which password is required, for example by displaying a message saying "please use level 1 password"; or "please use level 2 password" and so on.

### For example:

First level password:

| | | | | | | | | |
|---|---|---|---|---|---|---|---|---|
| Request Numbers: | 1 | 2 | 3 | 4 | 5 | 6 | 7 | 8 |
| Password letters: | D | A | V | E | B | U | C | K |

### Maximum value of any withdrawal £100 - Maximum monthly limit £500

Second level password:

| | | | | | | | | |
|---|---|---|---|---|---|---|---|---|
| Request Numbers: | 1 | 2 | 3 | 4 | 5 | 6 | 7 | 8 |
| Password letters: | A | B | E | R | D | O | N | S |

### Maximum value of any withdrawal £500 - Maximum monthly limit £1000

Third level password:

| | | | | | | | | |
|---|---|---|---|---|---|---|---|---|
| Request Numbers: | 1 | 2 | 3 | 4 | 5 | 6 | 7 | 8 |
| Password letters: | S | K | Y | E | B | R | I | G |

Maximum value of any withdrawal £500 and above - Maximum monthly limit £5000

If a card holder goes over their credit limit on password one for example for the rest of this calendar month, on future credit and bank card transactions the computer will request letters from password two. This could also apply to the credit limit on password two and the computer would request letters from password three.

In the unlikely event that someone got hold of all the letters in the first password (which would be the one used regularly), the maximum withdrawal would be £100 and limited to a maximum of £500 per month.

The Credit card company computer would be programmed to indicate the password required on the screen at the keypads or cash machines. It would be up to the individual card holder to determine the maximum amounts of withdrawals and cash limits per password and agree these figures with their bank.

There are many variations which could be used when a card holder has a multi-password credit or bank card. The user can be requested to enter different numbers of characters from different numbers of passwords depending on the transaction history and/or the amount of any transaction. For example they could minimise the withdrawal amount used in password one to say £50, and two letters would be requested on each transaction. From £50.01 to £250 two letters from password one and one letter from password two would be requested. From £250.01 up to £1000 two letters from password one and two letters from the second password would be requested. For amounts over £1000, two letters from password two and one or two letters from password three would be requested. Another example of password variation is if the card holder was abroad then random numbers/letters from passwords one, two and three would be requested.

The cardholder would predominately use the first password for everyday credit and cash card use. In the unlikely event of someone finding out the letters of the first password, the card holder would phone the credit card company help-line, cancel password one and move password two to the first position and the third to the second position. It would not be necessary to scrap their credit card and suffer the inconvenience of waiting a week to ten days to receive a new card. The new third password could be agreed between the card holder and the bank and set up soon after.

The choice of which of the PINs 132 to use can be based upon, for example, temporal criteria or geographical criteria. For example, the PIN 132 chosen may be "HOME" in alternate months and "F3JZ89" in the intervening months. Alternatively, where a plurality of PINs have been defined the PINs may be cycled through on a monthly, weekly, quarterly or yearly basis. For example where there are PINs one, two and three they could be rotated to be ordered three, one and two and on the subsequent rotation two, three and one.

An example of the variation and changing password can be explained as follows. Using the three passwords mentioned above (DAVE BUCK, ABER DONS and SKYE BRIG), the first password could be used in January, the second in February, the third in March and then back to the first password in April. In February, when the second password moves to the first position, the third password will move to the second position, and the first password moves to the third position and so on.

The following shows the position on each password rotation.

January, April, July and October: 1 st password = DAVE BUCK; 2nd password = ABER DONS; 3rd password =SKYE BRIG.

February, May, August and November: 1 st password = ABER DONS; 2nd password = SKYE BRIG; 3rd password = DAVE BUCK

March, June, September and October: 1 st password = SKYE BRIG; 2nd password = DAVE BUCK; 3rd password = ABER DONS.

There can be a number of variations on revolving and changing password. For example the passwords could change daily, weekly, every three months or randomly. It would be up to the individual card holder to decide and agree these intervals with the credit card company. Also, the credit card computer could be programmed to change randomly when a credit card is used frequently.

In relation to geographical criteria, the user may have a different PIN 132, or set of PINs, that is activated when a bank receives a request from an overseas ATM or EPOS terminal. This means that a card cloned overseas cannot be used reliably in the user's home country.

In a preferred embodiment, should a user feel uneasy about a request from a vendor they can use the alert key 114d to notify their financial institution of this. Examples of when this may be used include, if the vendor requested additional information about an already entered PIN or claimed that a transaction had not been processed following entry of the PIN 132. The use of the alert key 114d would trigger a request for characters from a special 'safe' PIN in the manner described hereinbefore in relation to standard PINs. The transaction would not be completed unless these letters were entered correctly by the user.

In a still further embodiment, the chip 130 allows a user to switch between PINs in response to a user request once the transaction has been allowed so as to maintain control over their PIN usage and prevent the reuse of a PIN that they have previously used.

As mentioned above, Fig. 1 b shows a data entry device 114 which has a change password key 114e. An example of the use of such a change password key will now be discussed, in which six passwords of easy to remember names with varying amounts of letters are used as follows (it is recommended that at least four passwords are used in practice):
Password 1

| | | | | | | | | |
|---|---|---|---|---|---|---|---|---|
| Request Numbers: | 1 | 2 | 3 | 4 | 5 | 6 | 7 | 8 |
| Password Letters: | J | O | H | N | L | E | N | O |

Password 2

| Request Numbers: | | | | | | | | |
|---|---|---|---|---|---|---|---|---|
| 1 | 2 | 3 | 4 | 5 | 6 | 7 | 8 | 9 |

| Password Letters: | | | | | | | | |
|---|---|---|---|---|---|---|---|---|
| P | A | U | L | M | C | A | R | T |

Password 3

| Request Numbers: | | | | | | | | | |
|---|---|---|---|---|---|---|---|---|---|
| 1 | 2 | 3 | 4 | 5 | 6 | 7 | 8 | 9 | 10 |

| Password Letters: | | | | | | | | | |
|---|---|---|---|---|---|---|---|---|---|
| G | E | O | R | G | E | H | A | R | I |

Password 4

| Request Numbers: | | | | | | | | | |
|---|---|---|---|---|---|---|---|---|---|
| 1 | 2 | 3 | 4 | 5 | 6 | 7 | 8 | 9 | 10 |

| Password Letters: | | | | | | | | | |
|---|---|---|---|---|---|---|---|---|---|
| R | I | N | G | O | S | T | A | R | S |

Password 5

| Request Numbers: | | | | | | | | |
|---|---|---|---|---|---|---|---|---|
| 1 | 2 | 3 | 4 | 5 | 6 | 7 | 8 | 9 |

| Password Letters: | | | | | | | | |
|---|---|---|---|---|---|---|---|---|
| T | H | E | C | A | V | E | R | N |

Password 6

| Request Numbers: | | | | | | | | |
|---|---|---|---|---|---|---|---|---|
| 1 | 2 | 3 | 4 | 5 | 6 | 7 | 8 | 9 |

| Password Letters: | | | | | | | | |
|---|---|---|---|---|---|---|---|---|
| L | I | V | E | R | P | O | U | L |

The following steps would be carried out in the operation of this method and system of a revolving password:
1) The six passwords will be programmed into the credit card company computer.
2) The Computer will be programmed to request a password number on the keypad or auto-teller screens when a card is swiped on each transaction.
3) The cardholder will have a choice to press the password number selector button, once for password one, twice for password two, and so on up to six times for password six.
4) The computer will flag up on the screen the password number requested by the cardholder.
5) The cardholder will press the enter button when they see the password number they wish to use is indicated on the screen.
6) The computer on receipt of this confirmation will select two random request numbers of this variable password.
7) The cardholder will select the appropriate two letters from the two requested numbers and press the required alphabetic keys and then press the enter button for confirmation to the credit card company computer.
8) The computer will confirm on the keypad screen if the PIN letters are the ones requested and allow the credit or bank transaction to proceed.
9) If the cardholder has selected any wrong letters or letter configuration the computer will be programmed to refuse this request and the process of selecting a password will start over again.
10) The credit card holder will be aware that the computer will be programmed not to accept the same password on the next attempt to purchase the same goods or cash. If this transaction was abandoned the computer will also have been programmed not to accept this password on the next transaction.
11) The computer could be programmed to display on screen the last password number used by the cardholder on each occasion the card is used, giving the cardholder an opportunity to select a different password number each time.
12) The computer could also be programmed to refuse a password if it has been used regularly. The Cardholder and the bank could agree a maximum number of times that the same password can be repeatedly used before a refusal signal is indicated and card cancellation is implemented.

The blocking of payment cards in response to unusual payment patterns is well established and is inconvenient for legitimate users of the blocked cards. However, a further embodiment of the present invention can allow this to be overcome by forcing a change of the requested PIN 132 from the server 104 of the financial institution if a particular PIN 132 has been used to verify a pre-determined number of transactions. For example, if the PIN 132 "HOME" has been used for fifty consecutive transactions the server 104 may force the card reader to request characters from the alternative PIN 132 "F3JZ89".

Referring now to Figure 2 of the drawings, a method of transaction security is shown which comprises storing, on a chip of a payment card, identification data comprising a PIN or multiple PINs associated with a user. Part of the PIN is selected for use in a verifying the identity of a user performing a transaction (Step 200). Code data is entered at a data entry device of an authorization device (Step 202). A determination is made if the code data matches the part of the PIN at the authentication device. (Step 204) The transaction is either allowed or disallowed based upon whether the code data and part of the PIN match (Step 206).

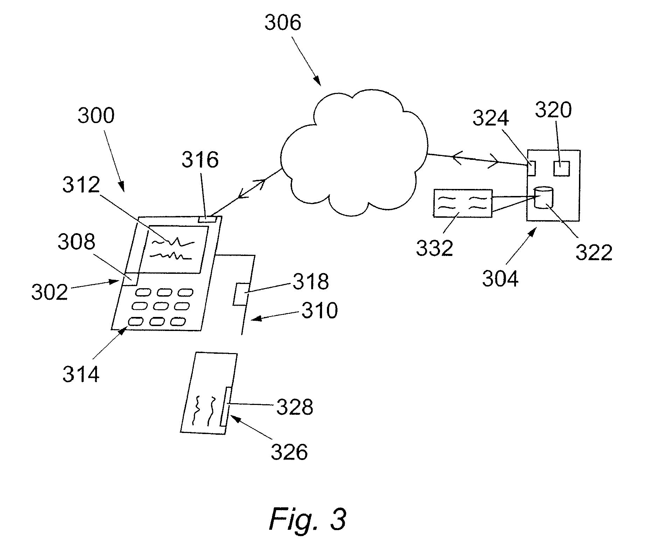

Referring now to Figure 3, an alternative embodiment of a transaction security apparatus 300 comprises a transaction device 302, a server 304 and a network 306. Typically, the transaction device 302 an ATM or an electronic point of sale (EPOS) sales terminal. The server 304 is typically a secure server operated by a bank or other financial institution. Typically, the network 306 is a secure private network, or a virtual private network (VPN) established over a public network, for example the Internet.

The transaction device 302 comprises a processor 308, a card reader 310, a screen 312, a data entry device 314 and a network connection 316. The card reader 310 comprises a magnetic strip reader 318. Typically, the data entry device 314 is an encrypted keyboard as is known to those skilled in the art of ATMs.

The server 304 comprises a processor 320, a data storage device 322 and a network connection 324. The data storage device 322 stores customers' account details and also their PiNs. Each customer may have more than one PIN. For example the PIN 332 may be a word that is important to a user for example "HOME" or it may be random selection of characters for example "F3JZ89".

A payment card 326 comprises a magnetic strip 328. A user inserts the payment card 326 into the card reader 310. The processor 308 interrogates the magnetic strip 328 such that the user's bank account can be identified. The processor 308 contacts the server 304 via the network 306 and requests part of a PIN 332 associated with the account identified from the magnetic strip 328. The PIN is stored on the data storage device 322. For example, the server 304 transfers a request for the first and third characters of the PIN 332, to the transaction device 302. The PIN 332 resides at the server 304 and data corresponding to the elements of the PIN 332 are not transferred via the network 306.

The processor 308 outputs a request for these characters to the screen 312. The user enters code data via the data entry device 314. The methods of data entry available for this embodiment of the invention are substantially the same as those for the first embodiment of the invention, i.e. alphanumeric keypad or a numeric coding of alphabet letters.

The code data entered at the data entry device is transferred across the network 306 to the server 304. The server's processor 320 compares the code data to the requested part of the PIN 332, and a transaction is either forbidden or permitted dependent upon whether the code data and the PIN match.

If the transaction is allowed a debit is made from the user's account and confirmation data is passed across the network 306 to the transaction device 302.

The features of PIN management, for example the use and rotation of PINs, and enhanced transaction security described in relation to Figures 1 to 2 apply equally to the embodiment of Figure 3 but at a server level rather than via a chip on a payment card.

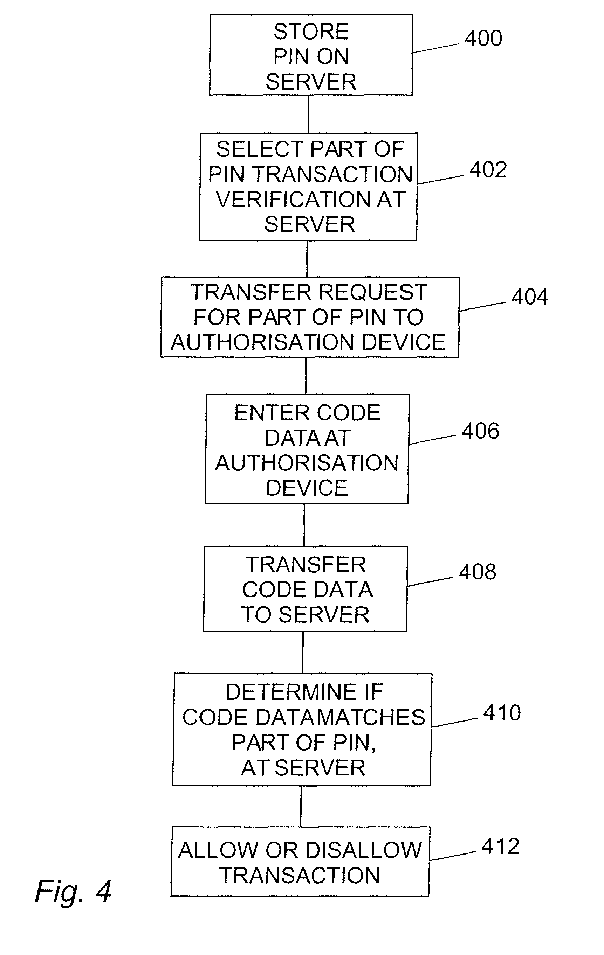

Referring now to Figure 4, a method of transaction security comprises storing, on a server, a PIN or multiple PINs associated with a user (Step 400). Part of the PIN is selected for use in a verifying the identity of a user performing a transaction (Step 402). A request for this part of the PIN is transferred across a network to a data entry device (Step 404). Code data is entered at a data entry device of an authorization device (Step 406). The code data is transferred from the data entry device to the server via the network (Step 408). A determination is made if the code data matches the part of the PIN at the server (Step 410). The transaction is either allowed or disallowed based upon whether the code data and part of the PIN match (Step 412).

In a further embodiment, the screen of the ATM or the POS terminal can display a list of transactions, together with an identifier (such as a number) representing the password that was used. This displayed transaction history can also be printed. Although a printer is not illustrated in the Figures, it will be understood to those skilled in the art that a printer can readily be incorporated with an ATM or a point of sale device in a well known manner for the incorporation of these features. The user can then scan the transaction history and identify any fraudulent transactions. He can then change his password, or in embodiments with multiple passwords it may be the case that the fraudster has obtained only one of the passwords, in which case the user can simply cancel that password, but can in the meantime continue to use the other passwords on his account.

It will be appreciated that non-mutually exclusive elements of the various embodiments may be freely interchanged and combined.

It will be appreciated that the disclosed invention is not limited to use with ATMs and EPOS terminals but may be readily incorporated into software for Internet transaction security, for example Internet banking.

It will be further appreciated that the use of passwords in conjunction with swipe cards is not limited to financial transactions but can be used in such areas as border controls and identity cards. It is envisaged that in such an identification system a user will input certain details with a government agency, for example height, weight and sex. When stopped by a law enforcement, or border, control officer an identity card will be swiped and the person asked to verify their identity by means of a password as described hereinbefore. The correct entry of a password, in conjunction with the user matching the previously entered physical criteria will be sufficient to identify the user as who they claim to be to the officer.

Another example use of the invention is in "cardholder not present" transactions, or in places where a user's card details are required in advance, for example in a hotel environment where the details are required in advance of a stay in order to secure a booking. In this scenario a hotel can be provided with a POS terminal that has an "identify" function. A server holds users' identification data, and so when making a reservation, the POS terminal at the hotel requests entry of the password, which the user making the reservation confirms. The code data thus entered is checked against the data on the server and a verification of a match is taken by the hotel as proof of identity. In this way, the hotel can be assured that the intention to stay is real and can reserve a space for the intended customer without having to take his card details.

Various modifications and variations to the described embodiments of the inventions will be apparent to those skilled in the art without departing from the scope of the invention. Although the invention has been described in connection with specific preferred embodiments, it should be understood that the invention as claimed should not be unduly limited to such specific embodiments.

## Claims

1. A method of performing a financial transaction comprising:
i) storing, on a chip of a payment card, identification data;
ii) selecting part of the identification data for use in verifying the identity of a user performing a transaction;
iii) requesting the entry of code data at a data entry device of an authorization device;
iv) determining if the code data matches the part of the identification data; and
v) allowing or disallowing continuation of the transaction based upon the determination of step (iv).

2. The method of claim 1, wherein the authorization device comprises an ATM or point of sales (POS) terminal.

3. The method of claim 1 or claim 2 comprising selecting a two character string as the part of the identification data.

4. The method of any preceding claim, wherein the given part of a given identification data that is selected is changed for successive uses of that identification data.

5. The method of any preceding claim comprising storing a plurality of identification data associated with a user upon the chip of a payment card.

6. The method of claim 5 wherein one or more of the plurality of identification data is associated with at least one of:
an upper limit transaction value;
a given time period;
a given geographical location;
an upper limit defining a maximum number of transactions; said association governing the allowance of a transaction.

7. The method of claim 5 or claim 6 wherein a user selects which of the identification data to select a part of for a given transaction.

8. The method of any of claims 5 to 7, wherein each of the plurality of identification data is associated with an identifier representing a logical position, said positions of the plurality of identification data rotating on a temporal or geographical basis.

9. The method of any of claims 5 to 8, wherein each of the plurality of identification data is associated with an identifier representing a logical position, and where a first position is associated with a first upper limit transaction value and a second position is associated with a second upper limit transaction value.

10. The method of any of claims 5 to 9, wherein the step of selecting part of the identification data for use in verifying the identity of a user performing a transaction comprises selecting parts from a plurality of identification data.

11. The method of any preceding claim wherein the identification data is an alphabetic or alphanumeric password, and said code data is a numeric string.

12. The method of claim 11, comprising coding the identification data as the code data using a coding key that assigns each letter of the identification data a numeric value corresponding to its position in the alphabet.

13. The method of any preceding claim, wherein the features of PIN management are carried out at a server instead of at an authorization device.

14. A transaction security apparatus comprising a transaction authorization device comprising a processor, a card reader and a data entry device, the transaction authorization device being arranged to:
request the selection of part of identification data for use in verifying the identity of a user performing a transaction following receipt of a payment card in the card reader, from a chip on the payment card; and to
request entry of code data via the data entry device,; and wherein
the processor is arranged to compare the code data and the part of the identification data selected for use in verification of the user's identity and to generate allowance data based upon the comparison; and wherein
the terminal is arranged either allow or prohibit the transaction based upon the contents of the allowance data and to output the allowance data to a server of a financial institution.

15. The apparatus of any of claim 14, being arranged to perform the method of any of claims 1 to 12.

16. A payment card comprising a chip, the chip storing an identification data thereupon, the chip being arranged to select a part of the identification data to be used as verification of a user's identity upon receipt of a request for identification data from an authorization device.

17. The payment card of claim 16 wherein the chip is arranged to store a plurality of identification data.

18. A computer program product executable on an authorization device or on a server for the implementation of any of the above methods.
